# EUROPÄISCHE PATENTSCHRIFT

(11) **EP 1 136 787 B1**
(45) Veröffentlichungstag und Bekanntmachung des Hinweises auf die Patenterteilung: **19.01.2005**
(21) Anmeldenummer: 01105913.6
(22) Anmeldetag: 09.03.2001
(51) Int. Cl.: G01B 11/02, G01J 3/50, B65H 23/02

(54) **Objektabbildung mit Abstandskompensation ( Grösse, Farbe )**
Object projection with distance compensation ( size, color )
Reproduction d'un objet avec compensation de la distance ( taille, couleur )

(30) Priorität: 24.03.2000 DE 10014627
(43) Veröffentlichungstag der Anmeldung: 26.09.2001
(73) Patentinhaber: Sick AG, 79183 Waldkirch, Breisgau (DE)
(72) Erfinder: Alt, Gerhard, 79350 Sexau (DE); Nübling, Ralf Ulrich, 79211 Denzlingen (DE); Bürger, Jürgen, 79331 Nimberg (DE)
(74) Vertreter: Manitz, Finsterwald & Partner GbR

(56) Entgegenhaltungen:
- EP-A- 0 031 973
- DE-U- 29 515 614
- FR-A- 2 028 482
- FR-A- 2 746 705
- JP-A- 60 073 403
- US-A- 4 371 783
- US-A- 5 117 101

## Beschreibung

Die vorliegende Erfindung betrifft ein Verfahren zum Abbilden von Objekten auf einer ortsauflösenden Empfangseinheit, bei dem ein Objekt über eine entozentrische optische Einheit auf der Empfangseinheit als Objektbild abgebildet wird. Weiterhin ist die Erfindung auf eine Vorrichtung zum Durchführen des Verfahrens gerichtet.

Verfahren dieser Art werden beispielsweise bei der Auswertung zweidimensionaler Objektfelder durch Bildverarbeitung bzw. bei der zeilenförmigen Auswertung von Objektkontrasten, wie sie beispielsweise bei der Kantenregelung oder bei der Breitenmessung erfolgt, eingesetzt. Auch bei Farbsensoren, die beispielsweise nach dem Drei-Bereichs-Verfahren die Farbe eines Objektes erkennen, können solche Verfahren eingesetzt werden.

Bei höheren, im allgemeinen meßtechnischen Anforderungen werden oftmals Objektive mit objektseitig telezentrischer Abbildung verwendet. Bei diesen Objektiven tragen nur sehr enge Strahlenbündel, deren Hauptstrahlen parallel zur optischen Achse verlaufen, zur optischen Abbildung bei. Die Verwendung telezentrischer Objektive hat den Vorteil, daß eine Änderung des Abstandes zwischen dem Objekt und der Empfangseinheit nicht zu einer Änderung des Abbildungsmaßstabes führt, solange man sich innerhalb des sogenannten Telezentriebereiches befindet (EP-A2,3-31 973). Bei der Verwendung von entozentrischen Objektiven ist hingegen eine solche Abstandsänderung mit einer Änderung des Abbildungsmaßstabes verbunden, was zur Folge hat, daß sich beispielsweise die Größe des Objektbildes auf der Empfangseinheit mit diesen Abstandsänderungen ändert.

Werden für meßtechnische Aufgaben entozentrische Objektive eingesetzt, so muß die Positionierung des Objektes in der sogenannten Nenntastweite, die durch den Soll-Abstand zwischen dem Objekt und der Empfangseinheit definiert ist, mit hoher Genauigkeit eingehalten werden.

Auch die Verwendung von telezentrischen Objektiven hat insbesondere bei der Anwendung in der Automatisierungstechnik entscheidende Nachteile. Zum einen besitzen diese Objektive eine sehr große Baulänge und zum anderen ist aufgrund der engen Strahlbündel nur eine sehr geringe Intensitätsübertragung möglich. Weiterhin muß das Meßfeld kleiner oder gleich dem Objektivdurchmesser sein, um innerhalb des Telezentriebereiches zu bleiben. Letztlich sind telezentrische Objektive auch relativ teuer, so daß die Einrichtung entsprechender optoelektronischer Vorrichtungen mit hohen Kosten verbunden ist.

Es ist eine Aufgabe der Erfindung, ein Verfahren sowie eine Vorrichtung der eingangs genannten Art anzugeben, bei denen gewährleistet ist, daß auch bei der Verwendung standardmäßiger entozentrischer Optiken, auch bei nicht vollständig exakter Positionierung der Objekte in einem Referenzabstand zu der Empfangseinheit, insbesondere in der Nenntastweite, die für meßtechnische Anforderungen geforderten hohen Maßstäbe eingehalten werden.

Der das Verfahren betreffende Teil dieser Aufgabe wird erfindungsgemäß ausgehend von einem Verfahren der eingangs genannten Art dadurch gelöst, daß zumindest ein Kompensationslichtsignal in Richtung des Objekts ausgesandt, von diesem reflektiert und über die optische Einheit auf die Empfangseinheit abgebildet wird, daß die Position des auf der Empfangseinheit auftreffenden Kompensationslichtsignals ermittelt wird und daß in Abhängigkeit von der ermittelten Position eine vorhandene Abstandsabweichung des Objektes von einem bezüglich der Empfangseinheit vorgegebenen Referenzabstand kompensiert wird.

Die die Vorrichtung betreffende Aufgabe wird erfindungsgemäß gelöst durch eine optoelektronische Vorrichtung mit einer ortsauflösenden Empfangseinheit, mit einer entozentrischen optischen Einheit zum Abbilden von Objekten auf der Empfangseinheit, mit zumindest einem Lichtsender zum Aussenden eines Kompensationslichtsignals in Richtung des Objekts, wobei die optische Einheit und die Empfangseinheit so angeordnet sind, daß das von dem Objekt reflektierte Kompensationslichtsignal über die optische Einheit auf die Empfangseinheit abbildbar ist, mit einer Positionsbestimmungseinheit zum Ermitteln der Position des auf der Empfangseinheit auftreffenden Kompensationslichtsignals und mit einer Kompensationseinheit zur Kompensierung einer vorhandenen Abstandsabweichung des Objektes von einem bezüglich der Empfangseinheit vorgegebenen Referenzabstand in Abhängigkeit von der ermittelten Position.

Erfindungsgemäß wird somit eine ungenaue Positionierung, die sich in einer Abstandsabweichung des Objektes von dem Referenzabstand, insbesondere von der Nenntastweite äußert, zunächst hingenommen, die Auswirkung dieser Abstandsabweichung jedoch kompensiert, um so zu möglichst genauen Meßergebnissen zu kommen. Dabei wird ein Kompensationslichtsignal so auf das Objekt ausgestrahlt, daß es zum einen über die optische Einheit auf die Empfangseinheit abgebildet wird und zum anderen eine Änderung des Abstandes zwischen dem Objekt und der Empfangseinheit zu einer Änderung der Position des auf der Empfangseinheit auftreffenden reflektierten Kompensationslichtsignals führt. Die jeweilige ermittelte Position des Kompensationslichtsignals ist repräsentativ für den jeweiligen Abstand des Objekts von der Nenntastweite, so daß aus der ermittelten Position des Kompensationslichtsignals unmittelbar auf den vorhandenen Abstand des Objektes von der Nenntastweite rückgeschlossen und dieser somit kompensiert werden kann.

Dazu können beispielsweise unterschiedlichen Positionen auf der Empfangseinheit jeweils vorgegebene Korrekturwerte zugeordnet sein, so daß in Abhängigkeit von der ermittelten Position des auf der Empfangseinheit auftreffenden Kompensationslichtsignals die Kompensation anhand des/der dieser Position zugeordneten Korrekturwertes/Korrekturwerte erfolgen kann. Die jeweiligen Korrekturwerte können dabei unmittelbar aus einer Korrekturtabelle oder, z.B. bei Matrixanordnung, aus mehreren Korrekturtabellen gewonnen werden. Vorteilhaft kann die Position des auf der Empfangseinheit auftreffenden Kompensationslichtsignals auch mit einer vorgegebenen Referenzposition verglichen und in Abhängigkeit von dem Vergleichsergebnis die Abstandsabweichung kompensiert werden.

Nach einer bevorzugten Ausführungsform der Erfindung wird die Referenzposition durch Ermitteln der Position des auf die Empfangseinheit auftreffenden Kompensationslichtsignals bei einer Anordnung des Objekts in der Nenntastweite bestimmt. Damit fallen die Referenzposition und die Position des Kompensationslichtsignals bei Anordnung des Objekts in der Nenntastweite unmittelbar zusammen, so daß in diesem Fall keine Kompensation einer Abstandsabweichung vorgenommen werden muß.

Die für die jeweilige Kompensation erforderlichen Kompensationswerte können beispielsweise in einem Einlernverfahren für eine Vielzahl von Abstandsabweichungen des Objektes eingelernt und abgespeichert werden. Es ist auch möglich, daß ein entsprechender funktionaler Zusammenhang zwischen dem jeweiligen erforderlichen Kompensationswert und dem Abstand zwischen der Referenzposition und der jeweils ermittelten Position des Kompensationslichtsignals auf der Empfangseinheit ausgewertet wird.

Vorteilhaft wird das Kompensationslichtsignal unter einem Winkel ungleich Null zur optischen Achse der optischen Einheit in Richtung des Objekts ausgesandt. Durch die schräge Anordnung des ausgesandten Kompensationslichtstrahls trifft dieser bei einer Bewegung des Objekts entlang der optischen Achse jeweils an unterschiedlichen Stellen-auf der Oberfläche des Objekts auf, so daß das reflektierte Kompensationslichtsignal jeweils an unterschiedlichen Positionen auf der Empfangseinheit abgebildet wird, die dem jeweiligen geänderten Abbildungsmaßstab entsprechen.

Nach einer weiteren vorteilhaften Ausführungsform der Erfindung wird das Kompensationslichtsignal als kolliminiertes Lichtbündel ausgesandt und/oder über eine weitere optische Einheit auf das Objekt abgebildet, insbesondere fokussiert. Zur Bestimmung der Position des Kompensationslichtsignals auf der Empfangseinheit kann dessen Schwerpunktslage bestimmt werden. Insbesondere bei einer Subpixelung ist dabei eine gewisse Unschärfe vorteilhaft oder sogar erforderlich, um aus der ermittelten Verteilung die Schwerpunktskoordinaten bestimmen zu können. Grundsätzlich muß das Abbild des Kompensationslichtsignals auf der Empfangseinheit somit kein punktförmiges Abbild sein, sondern es ist jede geometrische Form des Abbildes möglich, die bezüglich einer Änderung seiner Position auswertbar ist. Dabei können auch mehrere Abbilder, die von mehreren Kompensationslichtsignalen stammen, verwendet und ausgewertet werden.

Bevorzugt wird zum Abbilden des Objektes dieses aktiv beleuchtet, insbesondere indem Beleuchtungssignale in Richtung des Objektes ausgesandt werden. Durch die aktive Beleuchtung wird die Empfindlichkeit einer entsprechenden erfindungsgemäßen Vorrichtung erhöht.

Wird für die aktive Beleuchtung gepulstes Licht verwendet, so kann hierdurch eine verbesserte Hintergrundlichtausblendung erreicht werden. Dies gilt auch dann, wenn beispielsweise auch für die Kompensationslichtsignale gepulstes Licht verwendet wird.

Insbesondere wenn nach einer bevorzugten Ausführungsform die Pulsfrequenzen der Kompensationslichtsignale und der Beleuchtungslichtsignale unterschiedlich sind, können die auf der Empfangseinheit auftreffenden reflektierten Kompensationslichtsignale und Beleuchtungslichtsignale aufgrund ihrer unterschiedlichen Pulsfrequenzen unterschieden und entsprechend ausgewertet werden.

Eine weitere Möglichkeit zur Unterscheidung der Beleuchtungslichtsignale von den Kompensationslichtsignalen besteht darin, daß für die jeweiligen Signale Licht in unterschiedlichen Spektralbereichen verwendet wird. Beispielsweise kann dabei sichtbares Licht und/oder Licht im Infrarotbereich und/oder im UV-Bereich, insbesondere im nahen UV-Bereich, verwendet werden.

Werden nach einer weiteren bevorzugten Ausführungsform der Erfindung die Kompensationslichtsignale und die Beleuchtungslichtsignale jeweils zeitlich aufeinanderfolgend und insbesondere nicht überlappend ausgesandt, so ist eine Unterscheidung der Signale auch durch diese zeitlich versetzte Aussendung und damit das entsprechende zeitlich versetzte Empfangen möglich.

Weiterhin können die Kompensationslichtsignale und die Beleuchtungslichtsignale auch dadurch unterschieden werden, daß sie unterschiedliche Lichtintensitäten besitzen.

Um eine sichere Kompensation von Abstaridsabweichungen auch bei sehr schmalen Objekten ohne Hintergrund, wie beispielsweise Drähte, Fäden usw. zu gewährleisten, können die Kompensationslichtsignale nach einer bevorzugten Ausführungsform der Erfindung über die Oberfläche des jeweiligen Objektes geführt werden. Dies kann beispielsweise durch Einsatz eines Schwingspiegels oder eines Spiegelrades erfolgen. Die Bewegungsrichtung der Schwingbewegung ist dabei bevorzugt im wesentlichen senkrecht zur Längsausdehnung des Objektes angeordnet.

Die Kompensation der Abstandsabweichung des Objektes kann je nach Anwendungsfall in unterschiedlicher Weise erfolgen.

So besteht beispielsweise bei der meßtechnischen Bestimmung der Größe bzw. Breite eines Objektes das Problem, daß durch die beschriebene Abstandsabweichung des Objekts von der Nenntastweite unterschiedliche Abbildungsmaßstäbe entstehen, die zu entsprechenden unterschiedlichen Größen bzw. Breiten des auf der Empfangseinheit abgebildeten Objektbildes führen. In diesem Fall kann erfindungsgemäß die Größe oder Breite des Objektbildes ermittelt werden, aus dem Vergleichsergebnis die Abstandsabweichung des Objekts von der Nenntastweite bestimmt werden und aus der ermittelten Größe des Objektbildes und der bestimmten Abstandsabweichung eine korrigierte Größe des Objektbildes bestimmt werden, die der Größe des Objektbildes bei einer Positionierung in der Nenntastweite zur Empfangseinheit entspricht.

Wird anstelle der Größe eines Objekts dessen Kontur oder eine Kante des Objekts auf die Empfangseinheit abgebildet und ein entsprechendes Objektbild der Kontur bzw. der Kante erfaßt, so kann in analoger Weise eine korrigierte Kontur bzw. eine korrigierte Position einer Kante bestimmt werden.

Bei der Verwendung eines Kontrastsensors besteht das Problem, daß bei einer Abstandsabweichung des Objekts von der Nenntastweite die Kontrastauflösung reduziert wird. Dies kann erfindungsgemäß dadurch kompensiert werden, daß die Lichtintensität, worunter auch ein Lichtintensitätsverlauf zu verstehen ist, des Objektbildes ermittelt wird, daß aus dem Vergleichsergebnis die Abstandsabweichung des Objekts von der Nenntastweite bestimmt wird und daß aus der ermittelten Lichtintensität des Objektbildes und der bestimmten Abstandsabweichung eine korrigierte Lichtintensität bestimmt wird, die der Lichtintensität des Objektbildes bei einer Positionierung in der Nenntastweite zur Empfangseinheit entspricht. Somit lassen sich auch bei Kontrasttastern aus dem Vergleichsergebnis zwischen der Referenzposition und der ermittelten Position des Kompensationslichtsignals auf der Auswerteeinheit Korrekturfaktoren ableiten, mit der die jeweilige Abstandsabweichung des Objektes kompensiert und damit eine verbesserte Kontrastauflösung und eine gegenüber dem Stand der Technik größere Arbeitsabstandsvariation erzielt werden können.

Werden nach einer bevorzugten Ausführungsform der Erfindung Beleuchtungslichtsignale mit verschiedenen Farben, insbesondere mit drei verschiedenen Farben, verwendet, so kann für jede der Farben die Lichtintensität des Objektbildes ermittelt und die korrigierte Lichtintensität bestimmt werden. Dies ist insbesondere bei der Verwendung von Farbsensoren sinnvoll, die nach dem Drei-Bereichs-Verfahren arbeiten. Dabei werden beispielsweise für die Farben Rot, Grün und Blau in einem Lernvorgang die remittierten Intensitäten in einem Speicher abgelegt. Im Meßmodus werden dann die ermittelten Signalamplituden jeweils mit den entsprechenden gespeicherten Werten verglichen und bei Übereinstimmung wird die Objektfarbe als erkannt ausgegeben.

Da auch in diesem Fall die remittierten Intensitäten von der aktuellen Lernposition abhängig sind (Nenntastweite ± zulässiger Tiefenschärfebereich) und auch die während der eigentlichen Messung vorliegenden Intensitäten von der aktuellen Position des Tastgutes abhängen, ist bei üblichen Verfahren eine exakte Positionierung des Objektes in der Nenntastweite erforderlich. Durch die Abhängigkeit der Signalpegel des empfangenen Lichtes von der aktuell vorliegenden Tastweite wird die resultierende Farbauflösung reduziert.

Durch die Erfindung wird eine Verbesserung der Farbauflösung erreicht, da sich innerhalb des zulässigen Tiefenschärfenbereiches Korrekturfaktoren für die jeweiligen verwendeten Farben ableiten lassen, mit denen die gemessenen Intensitätswerte so weit korrigiert werden können, daß sie mit den eingelernten Werten exakt verglichen werden können.

Letztlich ist es nach einer weiteren vorteilhaften Ausführungsform der Erfindung auch möglich, daß das Objekt so lange in Richtung der Nenntastweite bewegt wird, bis die Position des auf der Empfangseinheit auftreffenden Kompensationslichtsignals mit der Referenzposition zumindest bis auf einen vorgegebenen Toleranzwert übereinstimmt. Bei dieser Ausführungsform wird somit die Kompensation der Abstandsabweichung des Objektes von der Nenntastweite nicht in eine Korrektur des entsprechenden Meßwertes umgesetzt, sondern es erfolgt unmittelbar eine Regelung der Position des Objektes, bis sich dieses wieder in der Nenntastweite befindet. Es ist somit die Realisierung eines Autofokussystems möglich, durch das eine automatische exakte Positionierung des Objektes gewährleistet ist.

Weitere vorteilhafte Ausführungsformen der Erfindung sind in den Unteransprüchen angegeben.

Die Erfindung wird nachfolgend anhand von Ausführungsbeispielen unter Bezugnahme auf die Zeichnungen näher erläutert; in diesen zeigen:
- Figur 1: eine schematische Darstellung einer ersten Ausführungsform der Erfindung mit drei unterschiedlichen Positionierungen eines Objekts und
- Figur 2: eine schematische Darstellung einer weiteren Ausführungsform der Erfindung.

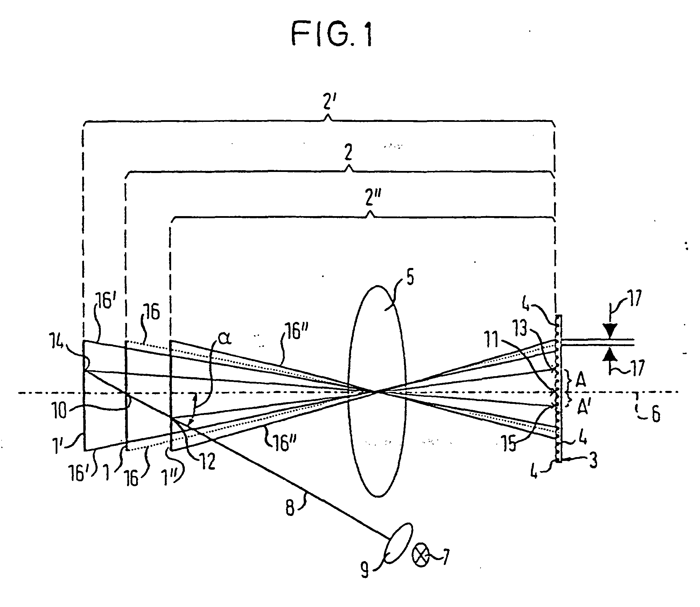

Figur 1 zeigt ein Objekt 1, das in unterschiedlichen Abständen 2, 2', 2" von einer als Zeilensensor ausgebildeten ortsauflösenden Empfangseinheit 3 angeordnet ist und im folgenden je nach Positionierung mit 1, 1' oder 1" bezeichnet wird. Die Empfangseinheit 3 umfaßt eine Vielzahl von lichtempfindlichen Sensorelementen 4, durch die auf die Empfangseinheit 3 auftreffende Lichtstrahlen empfangen werden können, so daß über eine nicht dargestellte Auswerteeinheit die Position der auf die Empfangseinheit 3 auftreffenden Lichtstrahlen ermittelbar ist.

Zwischen den Objekten 1, 1', 1" und der Empfangseinheit 3 ist eine entozentrische optische Einheit 5 angeordnet, die vereinfacht als Linse dargestellt ist. Weiterhin ist die optische Achse 6 der optischen Einheit 5 gestrichelt dargestellt.

Im unteren Bereich der Figur 1 ist ein Lichtsender 7 angeordnet, der einen Kompensationslichtstrahl 8 über eine Linse 9 unter einem Winkel α zur optischen Achse 6 in Richtung der Objekte 1, 1', 1" aussendet.

Befindet sich das Objekt im Abstand 2 von der Empfangseinheit 3, das heißt in der sogenannten Nenntastweite, wie es durch das Bezugszeichen 1 gekennzeichnet ist, so wird der Kompensationslichtstrahl 8 an einem Punkt 10, der mit dem Schnittpunkt des Objekts 1 und der optischen Achse 6 zusammenfällt, reflektiert und entlang der optischen Achse 6 über die optische Einheit 5 auf die Empfangseinheit 3 abgebildet. Die Position des auf die optische Einheit 3 auftreffenden reflektierten Kompensationslichtstrahls 8 ist durch ein Kreuz 11 dargestellt.

Wird das Objekt 1 in Richtung der Empfangseinheit 3 verschoben, so daß es im Abstand 2" an der mit dem Bezugszeichen 1" gekennzeichneten Stelle zu liegen kommt, so wird der Kompensationslichtstrahl 8 an einem Punkt 12 der Oberfläche des Objekts 1" reflektiert, der in der Figur 1 unterhalb der optischen Achse 6 liegt. In diesem Fall wird der Kompensationslichtstrahl 8 durch die optische Einheit 5 an eine durch ein Kreuz 13 bezeichnete Position auf der Empfangseinheit 3 abgebildet. Diese durch das Kreuz 13 gekennzeichnete Position besitzt von der durch das Kreuz 11 gekennzeichneten, die Positionierung des Objekts 1 in der Nenntastweite 2 repräsentierenden Referenzposition einen Abstand A.

Wird das Objekt 1 hingegen von der Empfangseinheit 3 wegbewegt, bis es den Abstand 2' von der Empfangseinheit 3 einnimmt, wie es durch das Bezugszeichen 1' gekennzeichnet ist, so trifft der Kompensationslichtstrahl 8 auf dem Objekt 1' auf einen Punkt 14 auf der Oberfläche des Objekts 1' auf, von wo er über die optische Einheit 5 an eine durch ein Kreuz 15 gekennzeichnete Position auf der Oberfläche der Empfangseinheit 3 abgebildet wird. Diese durch das Kreuz 15 gekennzeichnete Position weist von der durch das Kreuz 11 gekennzeichneten Referenzposition einen Abstand A' auf.

Die Objekte 1, 1', 1" werden entweder passiv oder aktiv beleuchtet über die optische Einheit 5 auf die Empfangseinheit 3 abgebildet, wobei diese Abbildungen durch die jeweiligen Randstrahlen 16, 16', 16" dargestellt sind.

Abhängig von dem jeweiligen Abstand 2, 2', 2" ändert sich das Abbildungsverhältnis der dargestellten optoelektrischen Vorrichtung, so daß auf der Empfangseinheit 3 Objektbilder unterschiedlicher Größe abgebildet werden. Bezogen auf die Abbildung des Objekts 1 in der Nenntastweite ist die durch den unterschiedlichen Abbildungsmaßstab erzeugte Abweichung der Objektgeometrie bei einer Verschiebung des Objekts 1 in seine Position 1' in Figur 1 durch zwei Pfeile 17 gekennzeichnet.

Handelt es sich bei dem Objekt 1 um einen Gegenstand, dessen Größe vermessen werden soll, so ist aus Figur 1 ersichtlich, daß abhängig von dem jeweiligen Abstand 2, 2', 2" des Objektes zur Empfangseinheit 3 unterschiedliche Meßergebnisse erhalten werden.

Zur Kompensation dieses Meßfehlers aufgrund der unterschiedlichen Abbildungsmaßstäbe wird erfindungsgemäß die jeweilige Position 13, 15 des abgebildeten Kompensationslichtstrahls 8 auf der Empfangseinheit 3 bestimmt und mit der Referenzposition 11 verglichen. Ausgehend von dem jeweiligen aktuellen Positionsunterschied des abgebildeten Kompensationslichtstrahls 8 von der Referenzposition 11 wird mittels entsprechender, abgespeicherter Kompensationsfaktoren bzw. einer vorgegebenen Kompensationsfunktion die gemessene Größe des Objektbildes so kompensiert, daß die korrekte Größe des Objektbildes, wie sie bei einer Positionierung des Objektes 1 in der Nenntastweite 2 gemessen wird, berechnet wird.

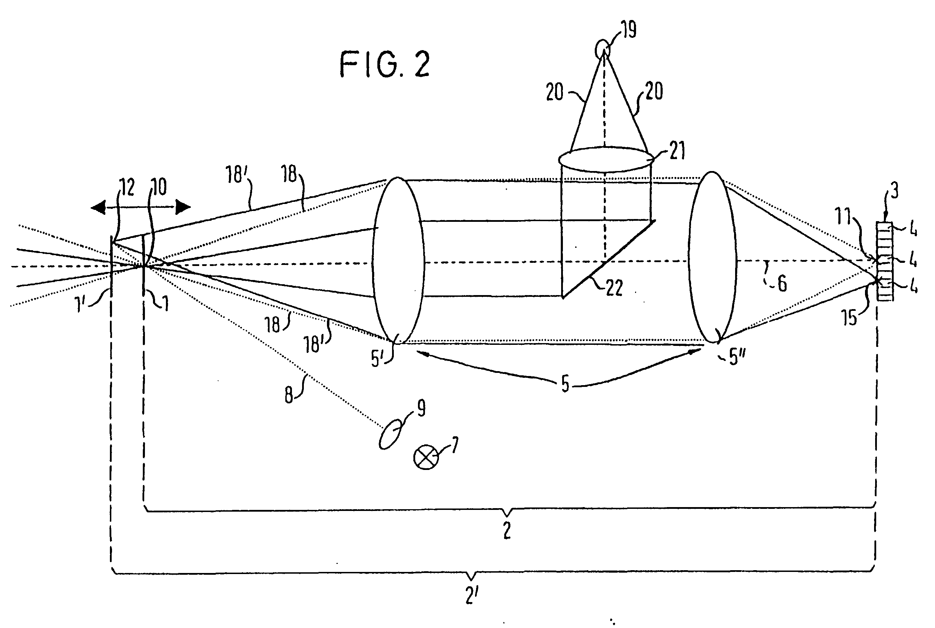

Figur 2 zeigt eine geänderte Ausführungsform der Erfindung, bei der jeweils Elemente, die der Ausführungsform gemäß Figur 1 entsprechen, mit den gleichen Bezugszeichen wie in Figur 1 versehen sind.

In der in Figur 2 gezeigten Ausführungsform umfaßt die entozentrische optische Einheit 5 zwei Linsen 5', 5".

Weiterhin sind Randstrahlen 18, 18' dargestellt, die die Abbildung des von dem jeweiligen Objekt 1 bzw. 1' reflektierten Kompensationsstrahls 8 über die Linsen 5', 5" auf durch die Kreuze 11, 15 gekennzeichneten Positionen auf der Empfangseinheit 3 darstellen.

Weiterhin ist in Figur 2 eine Lichtquelle 19 dargestellt, die beispielsweise sequentiell aufeinanderfolgend, rotes, grünes und blaues Licht gemäß dargestellter Randstrahlen 20 über eine Linse 21, einen zwischen den Linsen 5', 5" angeordneten Umlenkspiegel 22 sowie die Linse 5' als aktive Beleuchtung auf das Objekt 1 bzw. 1' abbildet.

Abhängig von der jeweiligen Farbe des Objektes 1 bzw. 1' werden die von der Lichtquelle 19 ausgesandten farbigen Lichtstrahlen mit unterschiedlicher Lichtintensität reflektiert, so daß auf der Empfangseinheit 3 unterschiedliche Lichtintensitäten ermittelt werden. Durch die unterschiedlichen erfaßten Lichtintensitäten kann letztlich die Farbe des Objektes 1 ermittelt werden. Dazu werden die ermittelten Signalamplituden der unterschiedlichen Farben mit für die Farben jeweils gespeicherten Werten verglichen.

Da die von der Empfangseinheit 3 erfaßten Lichtintensitäten sich bei einer Verschiebung des Objektes 1 aus der Nenntastweite 2 in den mit 2' bezeichnete Abstand ändern, resultiert ein Vergleich der aktuell erfaßten Lichtintensitäten bei einer Positionierung des Objektes im Abstand 2' mit den gespeicherten Lichtintensität für die unterschiedlichen Farbwerte in einer fehlerhaften erkannten Objektfarbe.

Durch die Bestimmung der durch das Kreuz 15 gekennzeichneten Position des reflektierten Kompensationslichtstrahls 8 auf der Empfangseinheit 3 und den Vergleich dieser Position mit der Referenzposition 11 können entsprechende Korrekturfaktoren, beispielsweise in einem Lernverfahren, für die Intensitätswerte der einzelnen farbigen Lichtstrahlen abgeleitet werden, mit denen die jeweiligen gemessenen Intensitätswerte so weit korrigiert werden können, daß sie den bei einer Positionierung des Objekts 1 in der Nenntastweite 2 vorhandenen Lichtintensitäten entsprechen. Somit wird durch diese Kompensation wiederum bei einem Vergleich der kompensierten erfaßten Werte der Lichtintensitäten mit den gespeicherten Werten die korrekte Objektfarbe ermittelt.

## Patentansprüche

1. Verfahren zum Abbilden von Objekten auf einer ortsauflösenden Empfangseinheit, bei dem ein Objekt über eine entozentrische optische Einheit auf der Empfangseinheit als Objektbild abgebildet wird,
**dadurch gekennzeichnet ,**
**daß** zumindest ein Kompensationslichtsignal in Richtung des Objekts ausgesandt, von diesem reflektiert und über die optische Einheit auf die Empfangseinheit abgebildet wird,
**daß** die Position des auf der Empfangseinheit auftreffenden Kompensationslichtsignals ermittelt wird und
**daß** in Abhängigkeit von der ermittelten Position eine vorhandene Abstandsabweichung des Objektes von einem bezüglich der Empfangseinheit vorgegebenen Referenzabstand kompensiert wird.

2. Verfahren nach Anspruch 1,
**dadurch gekennzeichnet,**
**daß** als Referenzabstand die Nenntastweite des optischen Systems verwendet wird.

3. Verfahren nach Anspruch 1 oder 2,
**dadurch gekennzeichnet,**
**daß** die Position des auf der Empfangseinheit auftreffenden Kompensationslichtsignals mit einer vorgegebenen Referenzposition verglichen wird und in Abhängigkeit von dem Vergleichsergebnis die Abstandsabweichung kompensiert wird, insbesondere
**daß** die Referenzposition durch Ermitteln der Position des auf die Empfangseinheit auftreffenden Kompensationslichtsignals bei einer Anordnung des Objekts im Referenzabstand, insbesondere in der Nenntastweite bestimmt wird.

4. Verfahren nach einem der vorhergehenden Ansprüche,
**dadurch gekennzeichnet,**
**daß** unterschiedlichen Positionen auf der Empfangseinheit jeweils vorgegebene Korrekturwerte zugeordnet sind und daß in Abhängigkeit von der ermittelten Position des auf der Empfangseinheit auftreffenden Kompensationslichtsignals die Kompensation anhand des/der dieser Position zugeordneten Korrekturwertes/Korrekturwerte erfolgt.

5. Verfahren nach einem der vorhergehenden Ansprüche,
**dadurch gekennzeichnet ,**
**daß** das Kompensationslichtsignal unter einem Winkel (α) ungleich Null zur optischen Achse der optischen Einheit in Richtung des Objekts ausgesandt wird und/oder
**daß** das Kompensationslichtsignal als kolliminiertes Lichtbündel ausgesandt und/oder über eine weitere optische Einheit auf das Objekt abgebildet, insbesondere fokussiert wird.

6. Verfahren nach einem der vorhergehenden Ansprüche,
**dadurch gekennzeichnet,**
**daß** für die Kompensationslichtsignale gepulstes Licht verwendet wird.

7. Verfahren nach einem der vorhergehenden Ansprüche,
**dadurch gekennzeichnet,**
**daß** zum Abbilden des Objektes dieses aktiv beleuchtet wird, insbesondere indem Beleuchtungslichtsignale in Richtung des Objektes ausgesandt werden, wobei für die aktive Beleuchtung bevorzugt gepulstes Licht verwendet wird.

8. Verfahren nach Anspruch 6 oder 7,
**dadurch gekennzeichnet,**
**daß** die Pulsfrequenzen der Kompensationslichtsignale und der Beleuchtungslichtsignale unterschiedlich sind.

9. Verfahren nach einem der Ansprüche 7 oder 8,
**dadurch gekennzeichnet,**
**daß** für die Beleuchtungslichtsignale sichtbares Licht und/oder Licht im Infrarotbereich verwendet wird.

10. Verfahren nach einem der Ansprüche 7 bis 9,
**dadurch gekennzeichnet,**
**daß** die Kompensationslichtsignale und die Beleuchtungslichtsignale jeweils zeitlich aufeinanderfolgend und insbesondere nicht überlappend ausgesandt werden oder
**daß** die Kompensationslichtsignale und die Beleuchtungslichtsignale zeitlich überlappend, insbesondere gleichzeitig ausgesandt werden.

11. Verfahren nach einem der Ansprüche 7 bis 10,
**dadurch gekennzeichnet,**
**daß** die Kompensationslichtsignale und die Beleuchtungslichtsignale unterschiedliche Lichtintensitäten besitzen.

12. Verfahren nach einem der Ansprüche 7 bis 11,
**dadurch gekennzeichnet,**
**daß** die Kompensationslichtsignale und die Beleuchtungslichtsignale von der gleichen Lichtsendeeinheit ausgesandt werden oder daß die Kompensationslichtsignale und die Beleuchtungslichtsignale von unterschiedlichen Lichtsendeeinheiten ausgesandt werden.

13. Verfahren nach einem der vorhergehenden Ansprüche,
**dadurch gekennzeichnet,**
**daß** für die Kompensationslichtsignale sichtbares Licht und/oder Licht im Infrarotbereich verwendet wird und/oder
**daß** die Kompensationslichtsignale über die Oberfläche des Objekts geführt werden.

14. Verfahren nach einem der vorhergehenden Ansprüche,
**dadurch gekennzeichnet,**
**daß** die Größe des Objektbildes ermittelt wird, daß aus der ermittelten Position des auf der Empfangseinheit auftreffenden Kompensationslichtsignals, insbesondere aus dem Vergleichsergebnis, die Abstandsabweichung des Objekts von dem Referenzabstand, insbesondere der Nenntastweite, bestimmt wird und daß aus der ermittelten Größe des Objektbildes und der bestimmten Abstandsabweichung eine korrigierte Größe des Objektbildes bestimmt wird, die der Größe des Objektbildes bei einer Positionierung im Referenzabstand, insbesondere in der Nenntastweite zur Empfangseinheit entspricht.

15. Verfahren nach einem der vorhergehenden Ansprüche,
**dadurch gekennzeichnet,**
**daß** zumindest bereichsweise die Kontur des Objektbildes erfaßt wird, daß aus der ermittelten Position des auf der Empfangseinheit auftreffenden Kompensationslichtsignals, insbesondere aus dem Vergleichsergebnis, die Abstandsabweichung des Objekts von dem Referenzabstand, insbesondere der Nenntastweite bestimmt wird und daß aus der erfaßten Kontur des Objektbildes und der bestimmten Abstandsabweichung eine korrigierte Kontur des Objektbildes bestimmt wird, die der Kontur des Objektbildes bei einer Positionierung im Referenzabstand, insbesondere in der Nenntastweite zur Empfangseinheit entspricht.

16. Verfahren nach einem der vorhergehenden Ansprüche,
**dadurch gekennzeichnet,**
**daß** die Position einer Kante des Objektbildes ermittelt wird, daß aus der ermittelten Position des auf der Empfangseinheit auftreffenden Kompensationslichtsignals, insbesondere aus dem Vergleichsergebnis, die Abstandsabweichung des Objekts von dem Referenzabstand, insbesondere der Nenntastweite, bestimmt wird und daß aus der ermittelten Position der Kante des Objektbildes und der bestimmten Abstandsabweichung eine korrigierte Position der Kante bestimmt wird, die der Position der Kante des Objektbildes bei einer Positionierung im Referenzabstand, insbesondere in der Nenntastweite zur Empfangseinheit entspricht.

17. Verfahren nach einem der vorhergehenden Ansprüche,
**dadurch gekennzeichnet,**
**daß** die Lichtintensität des Objektbildes ermittelt wird, daß aus der ermittelten Position des auf der Empfangseinheit auftreffenden Kompensationslichtsignals, insbesondere aus dem Vergleichsergebnis, die Abstandsabweichung des Objekts von dem Referenzabstand, insbesondere der Nenntastweite, bestimmt wird und daß aus der ermittelten Lichtintensität des Objektbildes und der bestimmten Abstandsabweichung eine korrigierte Lichtintensität bestimmt wird, die der Lichtintensität des Objektbildes bei einer Positionierung im Referenzabstand, insbesondere in der Nenntastweite zur Empfangseinheit entspricht.

18. Verfahren nach Anspruch 17,
**dadurch gekennzeichnet,**
**daß** Beleuchtungslichtsignale mit verschiedenen Farben, insbesondere drei verschiedenen Farben, verwendet werden und daß für jede der Farben die Lichtintensität des Objektbildes ermittelt und die korrigierte Lichtintensität bestimmt wird

19. Verfahren nach einem der vorhergehenden Ansprüche.
**dadurch gekennzeichnet,**
**daß** das Objekt solange in Richtung des Referenzabstandes bewegt wird, bis die Position des auf der Empfangseinheit auftreffenden Kompensationslichtsignals mit der Referenzposition zumindest bis auf einen vorgegebenen Toleranzwert übereinstimmt.

20. Optoelektronische Vorrichtung mit einer ortsauflösenden Empfangseinheit (3),
mit einer entozentrischen optischen Einheit (5) zum Abbilden von Objekten auf der Empfangseinheit (3),
mit zumindest einem Lichtsender (7) zum Aussenden eines Kompensationslichtsignals (8) in Richtung des Objekts (1, 1', 1"),
wobei die optische Einheit (5) und die Empfangseinheit (3) so angeordnet sind, daß das von dem Objekt (1, 1', 1") reflektierte Kompensationslichtsignal (8) über die optische Einheit (5) auf die Empfangseinheit (3) abbildbar ist,
mit einer Positionsbestimmungseinheit zum Ermitteln der Position (13, 15) des auf der Empfangseinheit (3) auftreffenden Kompensationslichtsignals (8) und
mit einer Kompensationseinheit zur Kompensierung einer vorandenen Abstandsabweichung des Objektes (1, 1', 1") von einem bezüglich der Empfangseinheit vorgegebenen Referenzabstand (2) in Abhängigkeit von der ermittelten Position (13, 15), insbesondere zum Durchführen des Verfahrens nach einem der vorhergehenden Ansprüche.

21. Optoelektronische Vorrichtung nach Anspruch 20, wobei
eine Vergleichseinheit zum Vergleichen der ermittelten Position (13, 15) mit einer vorgegebenen Referenzposition (11) vorgesehen ist und/oder
daß die Empfangseinheit (3) als eindimensionaler Sensor, insbesondere als Zeilensensor, oder als zweidimensionaler Sensor, insbesondere als Matrixsensor, ausgebildet ist.

22. Optoelektronische Vorrichtung nach einem der Ansprüche 20 oder 21, wobei
eine Lichtquelle (19) zur aktiven Beleuchtung des Objektes (1, 1', 1") vorgesehen ist, insbesondere
daß die Lichtquelle (19) durch den Lichtsender (7) gebildet wird.

## Claims

1. A method of imaging objects on a spatially resolving receiver unit,
wherein an object is imaged as an object image on the receiver unit via an entocentric optical unit,
**characterized in that**
at least one compensation light signal is transmitted in the direction of the object, is reflected by this and is imaged on the receiver unit via the optical unit;
**in that** the position of the compensation light signal incident on the receiver unit is determined; and
**in that** an existing spacing deviation of the object from a reference spacing pre-set with respect to the receiver unit is compensated in dependence on the position determined.

2. A method in accordance with claim 1, **characterized in that** the nominal scanning length of the optical system is used as the reference spacing.

3. A method in accordance with claim 1 or claim 2, **characterized in that** the position of the compensation light signal incident on the receiver unit is compared to a pre-set reference position and the spacing deviation is compensated in dependence on the comparison result; in particular
**in that** the reference position is determined by determining the poition of the compensation light signal incident on the receiver unit with an arrangement of the object at the reference spacing, in particular at the nominal scanning length.

4. A method in accordance with any one of the preceding claims,
**characterized in that** respectively pre-set correction values are associated with different positions on the receiver unit; and **in that** the compensation takes place with reference to the correction value/correction values associated with this position in dependence on the determined position of the compensation light signal incident on the receiver unit.

5. A method in accordance with any one of the preceding claims,
**characterized in that** the compensation light signal is transmitted at an angle (α) not equal to zero to the optical axis of the optical unit in the direction of the object; and/or
**in that** the compensation light signal is transmitted as a collimated light beam and/or is imaged, in particular focused, on the object via a further optical unit.

6. A method in accordance with any one of the preceding claims,
**characterized in that** pulsed light is used for the compensation light signals.

7. A method in accordance with any one of the preceding claims,
**characterized in that** the object is actively illuminated for its imaging, in particular **in that** illumination light signals are transmitted in the direction of the object, with pulsed light preferably being used for the active illumination.

8. A method in accordance with claim 6 or claim 7, **characterized in that** the pulse frequencies of the compensation light signals and of the illumination light signals are different.

9. A method in accordance with one of the claims 7 or 8, **characterized**
**in that** visible light and/or light in the infrared region is/are used for the illumination light signals.

10. A method in accordance with any one of the claims 7 to 9,
**characterized in that** the compensation light signals and the illumination light signals are transmitted respectively successively in time and in particular in a non-overlapping manner; or
**in that** the compensation light signals and the illumination light signals are transmitted in a manner overlapping in time, in particular simultaneously.

11. A method in accordance with any one of the claims 7 to 10,
**characterized in that** the compensation light signals and the illumination light signals have different light intensities.

12. A method in accordance with any one of the claims 7 to 11,
**characterized in that** the compensation light signals and the illumination light signals are transmitted from the same light transmitter unit; or
**in that** the compensation light signals and the illumination light signals are transmitted from different light transmitter units.

13. A method in accordance with any one of the preceding claims,
**characterized in that** visible light and/or light in the infrared region is/are used for the compensation light signals; and/or
**in that** the compensation light signals are guided over the surface of the object.

14. A method in accordance with any one of the preceding claims,
**characterized in that** the size of the object image is determined; **in that** the spacing deviation of the object from the reference spacing, in particular from the nominal scanning length, is determined from the determined position of the compensation light signal incident on the receiver unit, in particular from the comparison result; and **in that** a corrected size of the object image is determined from the determined size of the object image and from the determined space deviation which corresponds to the size of the object image on a positioning at the reference spacing, in particular at the nominal scanning length to the receiver unit.

15. A method in accordance with any one of the preceding claims,
**characterized in that** the contour of the object image is sensed at least regionally; **in that** the spacing deviation of the object from the reference spacing, in particular fromthe nominal scanning length, is determined from the determined position of the compensation light signal incident on the receiver unit, in particular from the comparison result; and **in that** a corrected contour of the object image is determined from the sensed contour of the object image and from the determined spacing deviation which corresponds to the contour of the object image on a positioning at the reference spacing, in particular at the nominal scanning length to the receiver unit.

16. A method in accordance with any one of the preceding claims,
**characterized in that** the position of an edge of the object image is determined; **in that** the spacing deviation of the object from the reference spacing, in particular from the nominal scanning length, is determined from the determined position of the compensation light signal incident on the receiver unit, in particular from the comparison result; and **in that** a corrected position of the edge of the object image is determined from the determined position of the object image and from the determined space deviation, said corrected position corresponding to the position of the edge of the object image on a positioning at the reference spacing, in particular at the nominal scanning length to the receiver unit.

17. A method in accordance with any one of the preceding claims,
**characterized in that** the light intensity of the object image is determined; **in that** the spacing deviation of the object from the reference spacing, in particular from the nominal scanning length, is determined from the determined position of the compensation light signal incident on the receiver unit, in particular from the comparison result; and **in that** a corrected light intensity is determined from the determined light intensity of the object image and from the determined spacing deviation, said corrected light intensity corresponding to the light intensity of the object image on a positioning at the reference spacing, in particular at the nominal scanning length to the receiver unit.

18. A method in accordance with claim 17, **characterized in that** illumination light signals with different colors, in particular with three different colors, are used; and **in that** the light intensity of the object image is determined and the corrected light intensity is determined for each of the colors.

19. A method in accordance with any one of the preceding claims,
**characterized in that** the object is moved in the direction of the reference spacing for so long until the position of the compensation light signal incident on the receiver unit coincides with the reference position at least with the exception of a pre-determined tolerance value.

20. An optoelectronic apparatus comprising
a spatially resolving receiver unit (3);
an entocentric optical unit (5) for the imaging of objects on the receiver unit (3);
at least one light transmitter (7) for transmitting a compensation light signal (8) in the direction of the object (1, 1', 1"),
wherein the optical unit (5) and the receiver unit (3) are arranged such that the compensation light signal (8) reflected from the object (1, 1', 1") can be imaged on the receiver unit (3) via the optical unit (5);
a positioning determination unit for the determination of the position (13, 15) of the compensation light signal (8) incident on the receiver unit (3); and
a compensation unit for compensating a present distance deviation of the object (1, 1', 1") from a reference spacing (2) pre-set with respect to the receiver unit in dependence on the determined position (13, 15), in particular for carrying out the method in accordance with any one of the preceding claims.

21. An optoelectronic apparatus in accordance with claim 20, wherein a comparison unit is provided to compare the determined position (13, 15) with a pre-set reference position (11); and/or
wherein the receiver unit (3) is made as a one-dimensional sensor, in particular as a linear sensor, or as a two-dimensional sensor, in particular as a matrix sensor.

22. An optoelectronic apparatus in accordance with one of the claims 20 or 21, wherein a light source (19) is provided for the active illumination of the object (1, 1', 1"); in particular
wherein the light source (19) is formed by the light transmitter (7).

## Revendications

1. Procédé pour la formation d'images d'objets sur une unité de réception à résolution locale, dans lequel l'image d'un objet est formée sur l'unité de réception comme image-objet au moyen d'une unité optique entocentrique, **caractérisé en ce que** :
- au moins un signal de lumière de compensation est émis en direction de l'objet, réfléchi par celui-ci, et reproduit comme image sur l'unité de réception au moyen de l'unité optique ;
- la position du signal de lumière de compensation qui tombe sur l'unité de réception est évaluée ; et
- une variation existante de la distance de l'objet depuis une distance de référence prescrite par rapport à l'unité de réception est compensée en dépendance de la position évaluée.

2. Procédé selon la revendication 1, **caractérisé en ce que** la portée de balayage nominale du système optique est utilisée comme distance de référence.

3. Procédé selon l'une ou l'autre des revendications 1 et 2, **caractérisé en ce que** la position du signal de lumière de compensation qui tombe sur l'unité de réception est comparée à une position de référence prescrite et **en ce que** la variation de la distance est compensée en dépendance du résultat de comparaison, en particulier **en ce que** la position de référence est déterminée par l'évaluation de la position du signal de lumière de compensation qui tombe sur l'unité de réception lorsque l'objet est agencé à la distance de référence, en particulier à la portée de balayage nominale.

4. Procédé selon l'une des revendications précédentes, **caractérisé en ce que** des valeurs de correction prescrites sont associées respectivement à différentes positions sur l'unité de réception et **en ce que** la compensation a lieu selon la (les) valeur(s) de correction associée(s) à cette position, en dépendance de la position évaluée du signal de lumière de compensation qui tombe sur l'unité de réception.

5. Procédé selon l'une des revendications précédentes, **caractérisé en ce que** le signal de lumière de compensation est émis sous un angle (α) différent de zéro par rapport à l'axe optique de l'unité optique en direction de l'objet et/ou **en ce que** le signal de lumière de compensation est émis comme faisceau lumineux collimaté et/ou **en ce que** son image est formée sur l'objet, en particulier focalisée, via une autre unité optique.

6. Procédé selon l'une des revendications précédentes, **caractérisé en ce qu'**une lumière pulsée est utilisée pour les signaux de lumière de compensation.

7. Procédé selon l'une des revendications précédentes, **caractérisé en ce que**, pour former l'image de l'objet, celui-ci est éclairé activement, en particulier en émettant des signaux d'éclairage en direction de l'objet, une lumière pulsée étant utilisée de préférence pour l'éclairage actif.

8. Procédé selon l'une ou l'autre des revendications 6 et 7, **caractérisé en ce que** les fréquences d'impulsion des signaux de lumière de compensation et celles des signaux de lumière d'éclairage sont différentes.

9. Procédé selon l'une ou l'autre des revendications 7 et 8, **caractérisé en ce qu'**on utilise une lumière visible et/ou une lumière dans la plage infrarouge pour les signaux de lumière d'éclairage.

10. Procédé selon l'une des revendications 7 à 9, **caractérisé en ce que** les signaux de lumière de compensation et les signaux de lumière d'éclairage sont émis respectivement successivement temporellement, et en particulier sans chevauchement, ou **en ce que** les signaux de lumière de compensation et les signaux de lumière d'éclairage se chevauchent temporellement, en particulier sont émis simultanément.

11. Procédé selon l'une des revendications 7 à 10, **caractérisé en ce que** les signaux de lumière de compensation et les signaux de lumière d'éclairage possèdent des intensités de lumière différentes.

12. Procédé selon l'une des revendications 7 à 11, **caractérisé en ce que** les signaux de lumière de compensation et les signaux de lumière d'éclairage sont émis depuis la même unité d'émission de lumière ou **en ce que** les signaux de lumière de compensation et les signaux de lumière d'éclairage sont émis depuis différentes unités d'émission de lumière.

13. Procédé selon l'une des revendications précédentes, caractérisé en ce en ce qu'on utilise une lumière visible et/ou une lumière dans la plage infrarouge pour les signaux de lumière de compensation et/ou en ce que les signaux de lumière de compensation sont guidés sur la surface de l'objet.

14. Procédé selon l'une des revendications précédentes, caractérisé en ce en ce que :
- la taille de l'image-objet est évaluée ;
- la variation de la distance de l'objet depuis la distance de référence, en particulier depuis la portée de balayage nominale, est déterminée à partir de la position évaluée du signal de lumière de compensation qui tombe sur l'unité de réception, en particulier à partir du résultat de comparaison ; et
- une taille corrigée de l'image-objet est déterminée à partir de la taille évaluée de l'image-objet et de la variation de la distance déterminée, ladite taille corrigée correspondant à la taille de l'image-objet pour un positionnement à la distance de référence, en particulier à la portée de balayage nominale vers l'unité de réception.

15. Procédé selon l'une des revendications précédentes, caractérisé en ce en ce que :
- le contour de l'image-objet est saisi au moins par zones ;
- la variation de la distance de l'objet depuis la distance de référence, en particulier depuis la portée de balayage nominale, est déterminée à partir de la position évaluée du signal de lumière de compensation qui tombe sur l'unité de réception, en particulier à partir du résultat de comparaison ; et
- un contour corrigé de l'image-objet est déterminé à partir du contour saisi de l'image-objet et de la variation de la distance déterminée, ledit contour corrigé correspondant au contour de l'image-objet pour un positionnement à la distance de référence, en particulier à la portée de balayage nominale vers l'unité de réception.

16. Procédé selon l'une des revendications précédentes, caractérisé en ce en ce que :
- la position d'une arête de l'image-objet est évaluée ;
- la variation de la distance de l'objet depuis la distance de référence, en particulier depuis la portée de balayage nominale, est déterminée à partir de la position évaluée du signal de lumière de compensation qui tombe sur l'unité de réception, en particulier à partir du résultat de comparaison ; et
- une position corrigée de l'arête est déterminée à partir de la position évaluée de l'arête de l'image-objet et de la variation de la distance déterminée, ladite position corrigée correspondant à la position de l'arête de l'image-objet pour un positionnement à la distance de référence, en particulier à la portée de balayage nominale vers l'unité de réception.

17. Procédé selon l'une des revendications précédentes, caractérisé en ce en ce que :
- l'intensité de lumière de l'image-objet est évaluée;
- la variation de la distance de l'objet depuis la distance de référence, en particulier depuis la portée de balayage nominale, est déterminée à partir de la position évaluée du signal de lumière de compensation qui tombe sur l'unité de réception, en particulier à partir du résultat de comparaison ; et
- une intensité de lumière corrigée est déterminée à partir de l'intensité de lumière évaluée de l'image-objet et de la variation de la distance déterminée, ladite intensité de lumière corrigée correspondant à l'intensité de lumière de l'image-objet pour un positionnement à la distance de référence, en particulier à la portée de balayage nominale vers l'unité de réception.

18. Procédé selon la revendication 17, **caractérisé en ce qu'**on utilise des signaux de lumière d'éclairage comportant différentes couleurs, en particulier trois couleurs différentes et **en ce que** l'intensité de lumière de l'image-objet est évaluée pour chacune des couleurs et **en ce que** l'intensité de lumière corrigée est évaluée.

19. Procédé selon l'une des revendications précédentes, caractérisé en ce en ce que l'objet est déplacé en direction de la distance de référence jusqu'à ce que la position du signal de lumière de compensation qui tombe sur l'unité de réception coïncide avec la position de référence, au moins à une valeur de tolérance prescrite près.

20. Dispositif optoélectronique comportant une unité de réception (3) à résolution locale, comprenant :
- une unité optique entocentrique (5) pour former des images d'objets sur l'unité de réception (3) ;
- au moins un émetteur de lumière (7) pour émettre un signal de lumière de compensation (8) en direction de l'objet (1, 1', 1"), dans lequel l'unité optique (5) et l'unité de réception (3) sont agencées de sorte que l'image du signal de lumière de compensation (8) réfléchi par l'objet (1, 1', 1") peut être formée sur l'unité de réception (3) au moyen de l'unité optique (5);
- une unité de détermination de position pour évaluer la position (13, 15) du signal de lumière de compensation (8) qui tombe sur l'unité de réception (3) ; et
- une unité de compensation pour compenser une variation existante de la distance de l'objet (1, 1', 1") depuis une distance de référence prescrite (2) par rapport à l'unité de réception, en dépendance de la position évaluée (13, 15), en particulier pour mettre en oeuvre le procédé selon l'une des revendications précédentes.

21. Dispositif optoélectronique selon la revendication 20, dans lequel une unité de comparaison est prévue pour comparer la position évaluée (13, 15) à une position de référence prescrite (11) et/ou dans lequel l'unité de réception (3) est réalisée comme capteur unidimensionnel, en particulier comme capteur linéaire, ou comme capteur bidimensionnel, en particulier comme capteur matriciel.

22. Dispositif optoélectronique selon l'une ou l'autre des revendications 20 et 21, dans lequel une source de lumière (19) est prévue pour l'éclairage actif de l'objet (1, 1', 1"), en particulier dans lequel la source de lumière (19) est formée par l'émetteur de lumière (7).
